# EUROPEAN PATENT APPLICATION

(11) **EP 2 723 087 A2**
(43) Date of publication of application: **23.04.2014**
(21) Application number: 12801868.6
(22) Date of filing: 09.05.2012
(51) Int. Cl.: H04N 21/25, H04N 21/2387

(54) **IPTV SERVICE DEVICE AND METHOD FOR PROVIDING CONTINUOUS SERVICE**

(30) Priority: 20.06.2011 KR 20110059710; 22.08.2011 KR 20110083244
(71) Applicant: Electronics And Telecommunications Research Institute, Daejeon-si 305-700 (KR); Hankuk University of Foreign Studies Research and Industry University Cooperation Foundation, Gyeonggi-do 449-791 (KR)
(72) Inventor: PARK, Dae-Geun, Daejeon-si 305-762 (KR); KIM, Young-Il, Daejeon-si 305-755 (KR); KIM, Yang-Jung, Seoul 151-053 (KR); CHONG, Il-Young, Seongnam-si Gyeonggi-do 463-050 (KR)
(74) Representative: Betten & Resch
(86) International application number: PCT/KR2012/003642
(87) International publication number: WO 2012/176985

(57) **Abstract**

The present invention relates to an IPTV service device and method for providing continuous service. The method according to one embodiment of the present invention comprises: a service-request receiving step of receiving an IPTV service request from a user of an IPTV terminal; a service-confirming step of confirming whether or not the IPTV service has previously been stopped in response to the IPTV service request; and an IPTV-service providing step of providing the IPTV service to the IPTV terminal from the point at which service was stopped if the IPTV service has previously been stopped.

## Description

### Technical Field

The following description relates to an Internet protocol television (IPTV) apparatus and method for providing a continuous, seamless service, and more particularly, to an IPTV apparatus and method for enabling a user to continuously use an IPTV service each time accessing the IPTV service regardless of the type of an accessing terminal.

### Background Art

The information disclosed in this Background section is only for enhancement of understanding of the background of the invention and therefore it may contain information that does not form any part of the prior art.

Generally, an Internet protocol television (IPTV) service is a system through which digital imaging service, advanced common application platform (ACAP) service and a variety of user-tailored services are delivered over a high-speed broadband network to a television, and is regarded as a representative broadcast-communication convergence service. That is, the IPTV provides new types of interactive content, such as a Video on Demand (VoD), an electronic program guide (EPG), a T-commerce, a broadcasting program-associated data service, and the like, as well as broadcasting and Internet services, so that a user can use both communications and broadcasting services. A primary characteristic of IPTV is to provide an opportunity to a TV viewer to be more interactive with the service, whereas the conventional television service delivers a one-way and passive service. As such, IPTV is a service to deliver information service, video content, broadcasting, and the like using an IPTV terminal over a high-speed Internet.

As one of methods for supporting control and provision of services with differentiated quality levels, a service overlay network (SON) is used. SON not only simply provides services, but also enables a more dynamic service structure by searching, controlling and managing services being tailored to needs of a user, and thus improves service satisfaction. In addition, the SON provides an integration of a variety of needs of users, terminals with different specifications and an accessing network, thereby being capable of delivering a service efficiently.

With the increasing distribution of smartphones having high-end specifications, use of such content as high-resolution image and games is increasing. In a service environment where a user accesses an IPTV service system a number of times in an effort to use the same service, more flexible provision of service is required, which enables the user to easily access the IPTV service system regardless of location and to use continuous, seamless content service with an appropriate quality level.

### Technical Problem

One objective of the present invention is to provide continuous, seamless Internet protocol television (IPTV) service, which can allow a user to continuously use the IPTV service regardless of a type of a terminal that accesses the IPTV service.

Another objective of the present invention is to provide a virtualized cloud computing service, which allows for various services, whereby service satisfaction of the user can be increased and the cost for providing the service can be reduced, resulting in maximizing the efficiency of IPTV service provision.

### Technical Solution

In one general aspect, there is provided an Internet protocol television (IPTV) service apparatus comprising: a service request receiving unit configured to receive a request for an IPTV service from a user of an IPTV terminal; a service identifying unit configured to check whether the requested IPTV service has stopped being provided; and an IPTV service providing unit configured to continue to provide the IPTV service to the IPTV terminal from a stopped point if the provision of the IPTV service has been stopped before.

The request for the IPTV service may include continuous service request information that requests continuing to provide the IPTV service that has been stopped before.

The IPTV service providing unit may check whether the requested IPTV service has stopped being provided before by checking a service usage history that stores information about the IPTV service.

The IPTV service providing unit may check the information about the IPTV terminal and provide a service with a quality suitable to the IPTV terminal based on the checked information.

The IPTV service providing unit may include an IPTV service control unit configured to request a cloud computing service with respect to an application service and content that are required for the IPTV service, a cloud computing control unit configured to, in response to the request for a cloud computing service being received, create a cloud platform with respect to the application service and content and provide the cloud computing service through the cloud platform, and a service session connection management control unit configured to acquire location information of the IPTV terminal and location information of content of the IPTV service and to create a service session to provide the IPTV service for offering the content to the IPTV terminal.

The IPTV service providing unit may further include a user mobility management control unit configured to track a location of the IPTV terminal to acquire the location information.

The IPTV service providing unit may further comprise a content processing information control unit configured to store information about an IPTV service provided by the IPTV service apparatus.

The service session connection management control unit may manage a service session that is configured by information including an identification (ID) of a 3rd party service server, an ID of content and an ID of the IPTV terminal.

In another general aspect, there is provided an apparatus for providing an IPTV service, comprising: an IPTV service control unit configured to request a cloud computing service with respect to an application service and content that are required for the IPTV service; a cloud computing control unit configured to, in response to the request for a cloud computing service, create a cloud platform with respect to the application service and content and provide the cloud computing service through the cloud platform; and a service session connection management control unit configured to acquire location information of the IPTV terminal and location information of content of the IPTV service, and to create a service session to provide the IPTV service for offering the content to the IPTV terminal.

The apparatus may further comprise a user mobility management control unit configured to track a location of the IPTV terminal to acquire the location information.

The apparatus may further comprise a content processing information control unit configured to store information about an IPTV service provided by the IPTV service apparatus.

The service session connection management control unit may manage a service session that is configured by information including an identification (ID) of a 3rd party service server, an ID of content and an ID of the IPTV terminal.

In another general aspect, there is provided An Internet protocol television (IPTV) service method, comprising: providing an IPTV service in response to a request from an IPTV service subscriber for providing the IPTV service, the IPTV service subscriber using an IPTV terminal to access the IPTV service; storing a service usage history of the IPTV service in response to stopping the IPTV service; and in response to the subscriber re-accessing the IPTV service and requesting to resume the IPTV service, checking the service usage history and resuming the same IPTV service from a stopped point.

The IPTV service may be provided as a cloud service.

A terminal used to re-access and request resuming the IPTV service may differ from the terminal used to request starting the IPTV service.

Service qualities of the initially provided IPTV service and the resumed IPTV service may differ from each other.

The service qualities of the initially provided IPTV service and the resumed IPTV service may differ from each other depending on specifications of a terminal provided initially and at resumption.

The providing of the IPTV service may include issuing a request for a cloud computing service with respect to an application service and content that are required for the IPTV service, in response to receiving the request for a cloud computing service, creating a cloud platform for the application service and content and providing the cloud computing service, and acquiring location information of the IPTV terminal and location information of content of the IPTV service and creating a service session to provide the IPTV service for offering the content to the IPTV terminal.

In another general aspect, there is provided a method of providing an IPTV service, comprising: requesting a cloud computing service with respect to an application service and content that are required for the IPTV service; in response to receiving the request for a cloud computing service, creating a cloud platform with respect to the application service and content and providing the cloud computing service through the cloud platform; and acquiring location information of the IPTV terminal and location information of content of the IPTV service and creating a service session to provide the IPTV service for offering the content to the IPTV terminal.

The method may further comprise tracking a location of the IPTV terminal to acquire the location information.

Additional features of the invention will be set forth in the description which follows, and in part will be apparent from the description, or may be learned by practice of the invention.

### Advantageous Effects

Various IPTV services can be provided using the service overlay network and the cloud computing, and thus efficient content search and service quality are ensured.

In addition, the user can continue to be provided with seamless IPTV service content regardless of a type of a terminal that accesses an IPTV service.

Moreover, in the case of a virtualized cloud computing service, resource management and efficient use allows the provision of the service at a low cost, and the virtualization technology offered by the cloud computing service enables flexible and efficient use of IT resources, servers, storages and network resources, thereby reducing the processing load of the terminal and simultaneously enabling quick service provisioning so that the user can search for and be provided with a differentiated service. By associating with 3rd party services, the range of services provided for the user is widened, and thereby the service satisfaction of the user is increased and a cost for providing the service is reduced. Accordingly, the efficiency of provision of the IPTV service is maximized.

### Description of Drawings

FIG. 1 is a diagram illustrating an example of a service system including an Internet protocol (IP) TV service apparatus.
FIG. 2 is a diagram illustrating an example of an IPTV service apparatus.
FIG. 3 is a diagram illustrating an example of an IPTV service providing unit.
FIG. 4 is a flowchart illustrating an example of an IPTV service method.
FIG. 5 is a flowchart illustrating an example of a method of requesting control of an IPTV service.

### Mode for Invention

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

It is understood that although terms such as a first, a second, A, B, (a), (b) may be used herein to describe various elements and/or components, these elements and/or components should not be limited by these terms. These terms may be only used for the purpose of distinguishing one element or component from another element or component. Thus, an element or a component designated as "first" discussed below may be construed an element or a component designated as "second" without departing from the teachings of the present invention.

It is understood that when one element or component is described as being "connected to" or "coupled to" or "access" another element or component, it can be directly connected or coupled to, or access the other element or component, or intervening elements or components may be present.

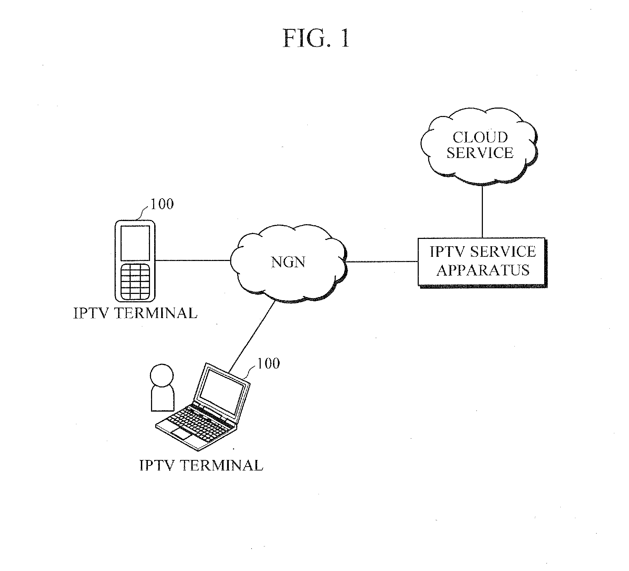

FIG. 1 is a diagram illustrating an example of a service system including an Internet protocol (IP) TV service apparatus.

As shown in Fig. 1, an IPTV terminal 100 accesses an IT service apparatus through such a next generation network (NGN) as an IP network so as to be provided with an IPTV service.

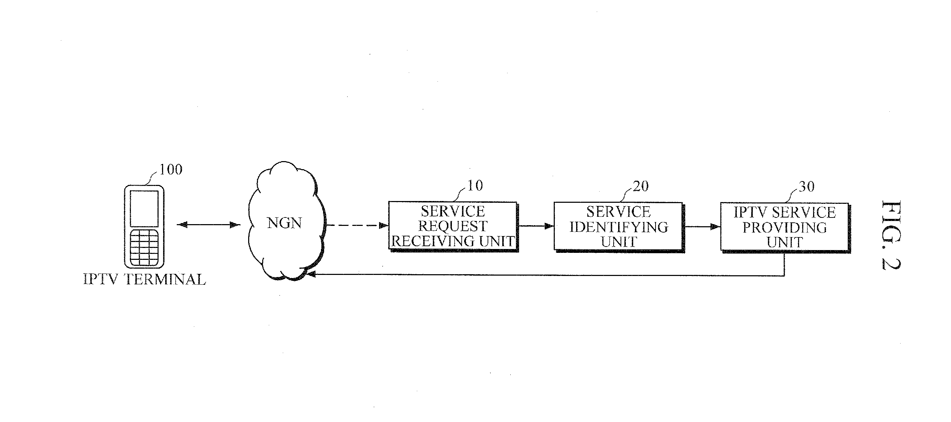

FIG. 2 is a diagram illustrating an example of an IPTV service apparatus. As shown in FIG. 2, an IPTV service apparatus provides an IPTV service to multiple IPTV terminals 100. The IPTV service apparatus includes a service request receiving unit 10, a service identifying unit 20, and an IPTV service providing unit 30.

The service request receiving unit 10 receives a request for an IPTV service from a user of the IPTV terminal 100. The service request receiving unit 10 receives the request for an IPTV service through an NGN from the user of the IPTV terminal 100. The request for an IPTV service may include information about IPTV content that the user wishes to receive, information about the IPTV terminal 100, continuous service request information, and the like. The continuous service request information is information to request to continue to provide an IPTV service from a point at which the IPTV service was stopped being provided. This continuous service request information is stored in the IPTV terminal 100, and is included in a request for an IPTV service when the IPTV terminal 100 issues the request, so that the continuous service request information can be transmitted to the service request receiving unit 10. According to an implementation method, the continuous service request information may be disincluded in the information of the IPTV service request.

The service identifying unit 20 checks whether an IPTV service corresponding to the IPTV service request received by the service request receiving unit 10 has stopped being provided before. The service identifying unit 20 determines whether the IPTV service has stopped being provided based on the continuous service request information transmitted from the IPTV terminal 100, or by checking a database that stores usage history information of the requested IPTV service.

In response to a determination being made that the provision of the IPTV service has been stopped halfway, the IPTV service providing unit 30 continues to provide the IPTV terminal 100 with the same IPTV service from the point at which the IPTV service was stopped being provided. In response to a determination being made that the IPTV service has never stopped being provided, the IPTV service providing unit 30 provides the IPTV terminal 100 with the IPTV service as a new service. The IPTV service providing unit 30 provides the IPTV service to the IPTV terminal 100 over the NGN.

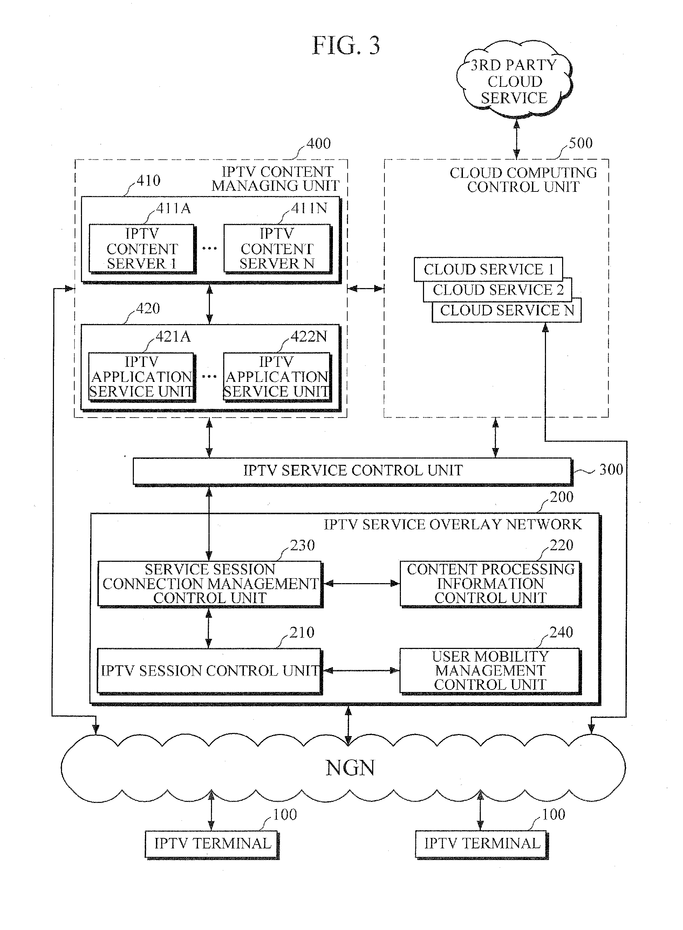

FIG. 3 is a diagram illustrating an example of an IPTV service providing unit.

As shown in FIG. 3, an IPTV service providing unit 30 includes an IPTV service overlay network system 200, an IPTV service control unit 300, an IPTV content managing unit 400, and a cloud computing control unit 500. In some embodiments, some of the above elements may be omitted or two or more elements may be integrated into one unit.

The service request receiving unit 10 and/or the service identifying unit 20 may be implemented as a function of the IPTV service control unit 300 or to be included as elements in the IPTV service overlay network system 200 or the IPTV content managing unit 400. The implementation of the service request receiving unit 10 and the service verifying unit 20 is provided only for purposes of example and it should be appreciated that the implementation may be performed in various manners.

The IPTV terminal 100 may be implemented as a variety of forms of devices, for example, a TV, a set-top box, an IPTV terminal, a mobile device, and the like, which is capable of using IPTV services. The IPTV terminal 100 accesses an IPTV service apparatus through a next-generation network (NGN), such as an IP network, and be able to receive the IPTV service from the IPTV service apparatus.

The IPTV service overlay network system 200 is connected to the NGN. The IPTV service overlay network system 200 may include an IPTV session control unit 210, a content processing information control unit 220, a service session connection management control unit 230, and a user mobility management control unit 240.

The IPTV session control unit 210 generates management session to receive information about a service request and the like from the user of the IPTV terminal 100, and acquire location information of the IPTV terminal 100. The IPTV session control unit 210 transfers the received location information of the IPTV terminal 100 to the IPTV service control unit 300, and requests the service session connection management control unit 230 to create and manage a user service session.

The IPTV session control unit 210 requests the user mobility management control unit 240 to transmit the location information of the IPTV terminal 100, and receives the location information from the user mobility management control unit 240.

The user mobility management control unit 240 is connected to an external location managing unit (not shown) so as to acquire the location information of the IPTV terminal 100 that requests the IPTV service. The user mobility management control unit 240 which receives the location information of the IPTV terminal 100 from the connected external location managing unit stores the received location information, and transmits the acquired location information to the IPTV session control unit 210. The location information which has been transmitted to the IPTV session control unit 210 from the external location managing unit is transferred to the service session connection management control unit 230, which uses the transferred location information for creating and managing an IPTV session. In this example, the NGN may serve a function as a location management unit (not shown) or an additional device may serve as the location management unit.

The service session connection management control unit 230 configures and manages a service session to maintain and control an IPTV service. In addition, the service session connection management control unit 230 performs handover between heterogeneous networks based on the location information of the IPTV terminal 100 received from the user mobility management control unit 240, or performs handover when a base station to which the IPTV terminal 100 is currently connected is changed to another base station, thereby being capable of continuing to provide the same IPTV service.

The service session connection management control unit 230 establishes an optimal IPTV session path between a server providing content and the IPTV terminal 100 by the use of IPTV content ID provided by the IPTV service control unit 300, the location information of the IPTV terminal 100 provided by the IPTV session control unit 210, location information of the content provided by the content processing information control unit 220, and the like.

In addition, the service session connection management control unit 230 modifies and/or deletes the established optimal IPTV session path, or adds a new optimal IPTV session path. To manage the optimal IPTV session path, the service session connection management control unit 230 collects location information of physical network equipment, network resource information, IPTV content information, and location information of a content server, such as an IPTV content server (for example, 411A, and 411N), and configures a session tree for establishing a session path based on the collected information.

In response to a request for changing an IPTV service path due to the IPTV content service requirements or conditions of the network for provision of the service, the service session connection management control unit 230 establishes a new optimal IPTV session path based on network resource information being collected from the previous IPTV session path and pieces of network equipment.

In addition, the service session connection management control unit 230 manages an IPTV session that is configured by ID of a content server, such as an IPTV server (for example, 411A, and 411N) or a 3rd party service server, provided by the content processing information control unit 220, the content ID, and ID of the IPTV terminal 100.

The service session configured by the service session connection management control unit 230 is a session for each service that satisfies requirements of the IPTV terminal 100. Various IPTV services are classified by the service session and the service session is managed by identifying the IPTV terminal 100 that uses the service.

In response to a request from the user of the IPTV terminal 100 for content stored in one of IPTV content servers 411A,..., and 411N, or content to be provided as a 3rd party service, the service session connection management control unit 230 adds an optimal logical path based on the location information of the IPTV terminal 100 that requests the content, and an actual network transmission path resulting from the optical logical path to the existing content transmission path.

In response to the user of the IPTV terminal 100 terminating the content service, the service session connection management control unit 230 searches to delete a content transmission path between the corresponding IPTV terminal 100 and one of the IPTV content server 411A to 411N and the 3rd party cloud service providing server, terminates a logical session for the corresponding IPTV service, and stops the transmission over the transmission path of an actual network corresponding to the logical session.

The content processing information control unit 220 stores the content information of the IPTV content servers 411A to 411N and the 3rd party service content server, and performs content search and checking of the location of content in response to a request from the service session connection management control unit 230 for the content information. For example, the content processing information control unit 220 may search for an IPTV content server closest to the IPTV terminal 100 among the IPTV content servers 411A to 411N so as to establish an optimal IPTV session path between the content server and the IPTV terminal 100. That is, in response to the request from the IPTV terminal 100 for the content service, the content processing information control unit 220 provides the geographically or positionally optimal content information based on the location information of the IPTV terminal 100 transmitted from the service session connection management control unit 230.

In addition, the content processing information control unit 220 searches for the corresponding content information among the stored content information in response to the request from the IPTV session control unit 210 in content search mode, and transmits the found content information to the IPTV session control unit 210, and the IPTV session control unit 210 transfers the received content information to the service session connection management control unit 230.

The IPTV service control unit 300 stores information of users of the IPTV services and information about the IPTV services, such as accounting information.

The IPTV service control unit 300 configures an environment to search for an application service and content required for configuring a service suitable to a request from the user of the IPTV terminal 100 and to provide, when necessary, a service requested by the user, for example, a cloud computing service. That is, if the IPTV service requested by the IPTV terminal 100 is provided by the 3rd party service server, the IPTV service control unit 300 searches for the application service and the corresponding content, configures a cloud computing environment, and transmits a cloud service request to the cloud computing control unit 500.

In response to a request from the user for termination of the IPTV service, the IPTV service control unit 300 requests the service session connection management control unit 230 to cancel the service session, and stores usage history information of the corresponding IPTV service. If the user wishes to stop the service halfway through, the IPTV service control unit 300 also stores information about a termination point of the service such that the user can be provided later with the same service from the termination point.

The IPTV content managing unit 400 includes an IPTV content server 410 consisting of a number of IPTV content servers 411A to 411N, each storing IPTV content, and an IPTV application processing unit 420 consisting of a number of IPTV application service units 421A to 421N, each being capable of providing various IPTV services to the IPTV terminal 100. The IPTV application processing unit 420 is connected to the IPTV service control unit 300 that uses the IPTV service, and the IPTV service control unit 300 stores service usage history of each user provided by the IPTV application processing unit 420 and manages the IPTV service such as accounting processing.

The cloud computing control unit 500 is connected to an external 3rd party service system receives a request from the IPTV service control unit 300 for a cloud service, and provides the corresponding service through a cloud platform that is created to be optimized using information about the application service and content that are configured by the IPTV service control unit 300. The cloud computing control unit 500 is associated with the IPTV service overlay network system 200 to create a service session and provides the IPTV terminal 100 with a cloud IPTV service.

The cloud computing control unit 500 enables the provision of various services to the user of the IPTV terminal 100, thereby increasing user satisfaction of the service. In addition, the cloud computing control unit 500 provides a virtualized cloud computing service, thereby reducing service provision costs and increasing, thus, the efficiency of IPTV service provision.

Procedures of registering IPTV content in the IPTV content servers 411A to 411N will now be described below.

The IPTV content managing unit 410 receives IPTV content metadata from a content owner and registers the received metadata in the IPTV content servers 411 A to 411N.

The IPTV content metadata is content ID, a title and detail of content, content information such as superclass, class, and subclass of the content, location information of the content server, and content transmission information such as codec and transmission required bandwidth. These pieces of information may be used to check content requested by the IPTV terminal 100 and to request search of the content.

The content processing information control unit 220 receives the content information from the IPTV content servers 411A to 411N and registers the received content information by classification and storing procedures.

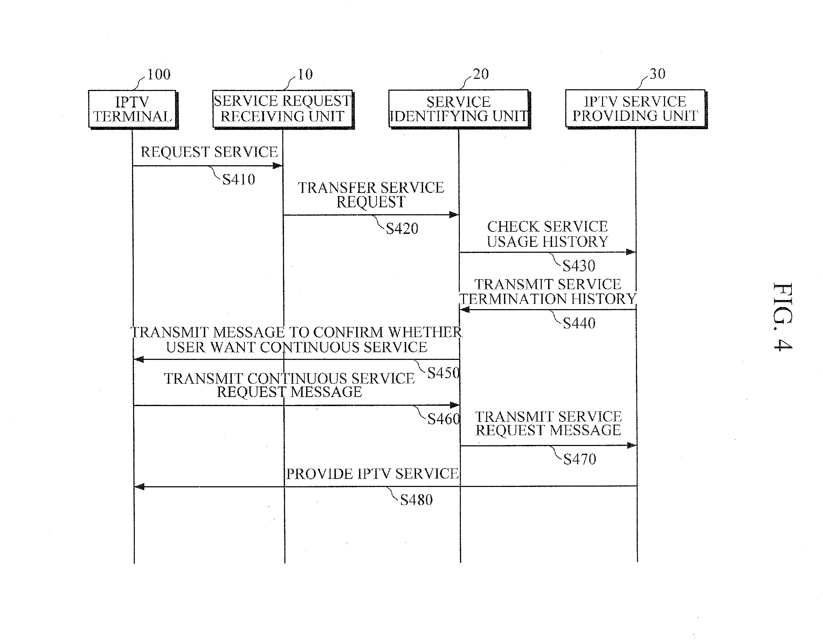

FIG. 4 is a flowchart illustrating an example of an IPTV service method.

A user of an IPTV terminal 100 accesses an IPTV web site to be offered with an IPTV service by inputting a predetermined ID and password.

The accessing IPTV terminal 100 requests a service by selecting an arbitrary content (for example, a content ID) from a list of contents provided by a service request receiving unit 10 in operation S410. A function served by the service request receiving unit 10 may be included in an IPTV application processing unit 420.

A service identifying unit 20 receives IPTV service information including the user information and information about the selected content from the service request receiving unit 10 in operation S420, and determines whether the selected service is the same service that has stopped being provided to the IPTV terminal 100 in operation S430. The service identifying unit 20 may store a database that stores history of the service having stopped being provided, or an IPTV service control unit 300 in an IPTV service providing unit 30 may store the database. If the IPTV service control unit 300 checks whether the service has stopped being provided, the service identifying unit 20 transmits a message to the IPTV service control unit 300 to request to determine whether the selected service has previously stopped being provided.

The IPTV service control unit 300 looks up a service usage history of the user and transmits, to the service identifying unit 20, a found result that shows whether the selected service has stopped being provided in operation S440.

The service identifying unit 20 transmits a message to the IPTV terminal 100 to inquire whether the user wishes to continue to be provided with the same service that has stopped being provided before in operation S450, and in response to the message, the user issues a continuous service request message to request to continue to provide the same service in operation S460.

In response to the continuous service request message, the service identifying unit 20 transmits a message to the IPTV service control unit 300 to request to continue to provide the corresponding service from the termination point in operation S470.

Alternatively, in response to a message from the user to request to provide the service from the beginning, the service identifying unit 20 transmits a message to the IPTV service control unit 300 to request the corresponding service from the beginning in operation S470.

In response to the service request message from the service identifying unit 20, the IPTV service control unit 300 provides the corresponding service to the IPTV terminal in operation S480.

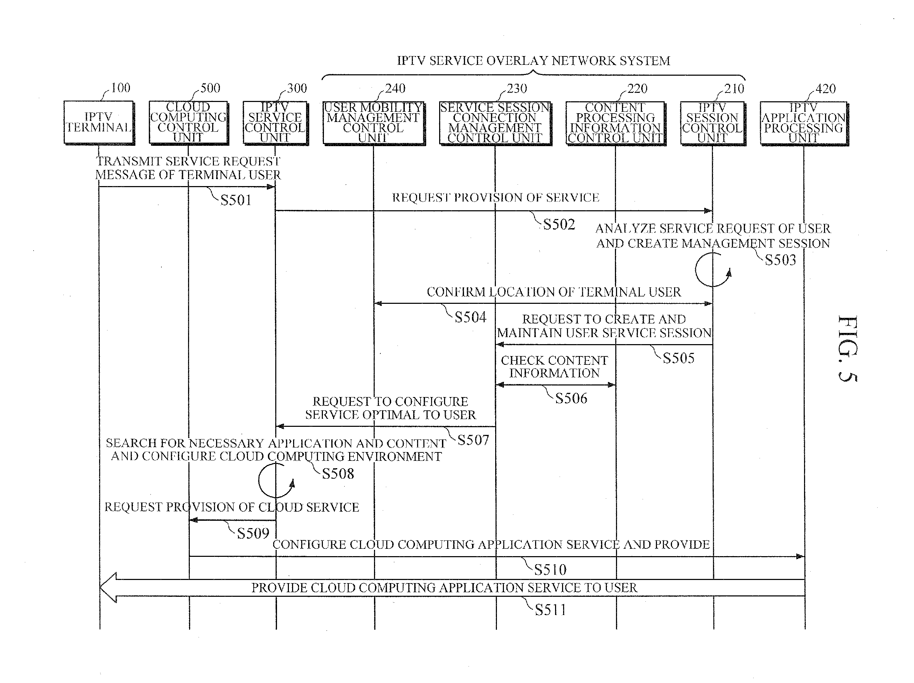

FIG. 5 is a flowchart illustrating an example of a method of requesting control of an IPTV service. The example shown in FIG. 5 is an overall flow for providing content through a cloud computing service from an IPTV service overlay network system 200 to an IPTV terminal 100.

As described above, the IPTV terminal 100 accesses an IPTV website by inputting an ID and password, and an IPTV service request message is transmitted to an IPTV service control unit 300 in operation S501. In response to the IPTV service request message, the IPTV service control unit 300 verifies a content ID of a requested service, information of the IPTV terminal 100 and information of the user. If the requested service is paid content, the IPTV service control unit 300 manages procedures related to accounting.

In response to the IPTV service request message being received from the IPTV terminal 100, the IPTV service control unit 300 transmits to an IPTV session control unit 210 a service request message including information about the user of the corresponding IPTV service and content information and requests the IPTV session control unit 210 to control the IPTV service in operation S502. If the requested service can be provided by a 3rd party service provider via a cloud service, not by an IPTV application processing unit 420, the service request message to the IPTV session control unit 210 includes information of a corresponding 3rd party service.

In response to service request information of the IPTV terminal 100 being received, the IPTV session control unit 210 of the IPTV service overlay network system 200 checks the service request message from the user based on the service request information of the IPTV terminal 100 and creates a management session with the IPTV terminal 100 in operation S503.

The IPTV session control unit 210 requests a user mobility management control unit 240 for location information of the IPTV terminal 100, and receives the location information of the IPTV terminal 100 from the user mobility management control unit 240 in operation S504.

The IPTV session control unit 240 confirms the location information of the IPTV terminal 100, and then requests a service session connection management control unit 230 to create a user service session and maintain the service session in operation S505.

The service session connection management control unit 230 requests a content processing information control unit 220 to search for the location of the content and control-related information with respect to the requested service, and receives the found information from the content processing information control unit 220 in operation S506.

The service session connection management control unit 230 requests the IPTV service control unit 300 to configure a service optimal to the request from the IPTV terminal 100 in operation S507, and the IPTV service control unit 300 configures an application service, content, and a cloud computing environment that are required for providing a corresponding IPTV service based on the service request from the service session connection management control unit 230 in operation S508. If the IPTV service is provided by a 3rd party, the IPTV service control unit 300 requests a cloud computing control unit 500 to provide the IPTV service in operation S509. If the IPTV service is not provided by the 3 rd party, the IPTV service control unit 300 requests an application processing unit 420 to provide the IPTV service.

In response to the request for a cloud service being received from the IPTV service control unit 300, the cloud computing control unit 500 distributes resources such as transmission bandwidth with respect to the requested cloud service, configures a software platform required for the service, and provides the application processing unit 420 with mobile IPTV application service and content through the configured platform in operation S510. The application processing unit 420 provides the IPTV content from the cloud computing control unit 500 to the user of the IPTV terminal 100 through the service session created for a cloud computing service in association with the service overlay network system 200 in operation S511.

If the IPTV service is terminated for various reasons, for example, because the user of the IPTV terminal 100 stops receiving the IPTV service, or because the IPTV terminal 100 was automatically logged out from the IPTV service since the IPTV terminal 100 is located in a shadow area for a predetermined period of time and thereby fails to receive content of the IPTV service, the IPTV service control unit 300 records information about the stopped IPTV service, for example, a termination point of content, a type of an application service, and the like.

Meanwhile, a subscriber to the IPTV service may access the IPTV service later via a different terminal. That is, the terminal currently used by the IPTV subscriber to re-access the IPTV service may be different from the previous terminal that was used at the time of termination of the IPTV service. For example, the previously used terminal may be a smartphone, and the later terminal that re-accesses the IPTV service and requests the same IPTV service may be a personal computer (PC). In response to the different terminal re-accessing the IPTV service and requesting the same service content, a service usage history may be checked and the same IPTV service content may continue to be provided from the termination point.

Thus, a service quality of the IPTV service initially provided may differ from a service quality of the IPTV service provided after the re-access.

The service quality of the IPTV service may be varied with specifications of the terminal, such as the display resolution, communication speed, and the like.

The stored service usage history is used when the user logs in the IPTV service with the intention to continue to use the same IPTV service content. If the terminal that re-accesses the IPTV service is different from the previous terminal, for example, if the user initially used a smartphone to receive an IPTV service content, then stopped receiving the IPTV service content, and re-accesses later the IPTV service through a user's PC at home in an effort to use the same IPTV service content, the same IPTV service content may be provided at a level of quality suitable to the new terminal environment such as new bandwidth and new display resolution.

The above-described examples are not limited to the above elements, and it should be appreciated that one or more of the above elements may be selectively combined to implement various modification.

As described above, various IPTV services can be provided using the service overlay network and the cloud computing, and thus efficient content search and service quality are ensured.

In addition, the user can continue to be provided with seamless IPTV service content regardless of a type of a terminal that accesses an IPTV service.

Moreover, in the case of a virtualized cloud computing service, resource management and efficient use allows the provision of the service at a low cost, and the virtualization technology offered by the cloud computing service enables flexible and efficient use of IT resources, servers, storages and network resources, thereby reducing the processing load of the terminal and simultaneously enabling quick service provisioning so that the user can search for and be provided with a differentiated service. By associating with 3rd party services, the range of services provided for the user is widened, and thereby the service satisfaction of the user is increased and a cost for providing the service is reduced. Accordingly, the efficiency of provision of the IPTV service is maximized.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. An Internet protocol television (IPTV) service method, comprising:
providing an IPTV service in response to a request from an IPTV service subscriber for providing the IPTV service, the IPTV service subscriber using an IPTV terminal to access the IPTV service;
storing a service usage history of the IPTV service in response to stopping the IPTV service; and
in response to the subscriber re-accessing the IPTV service and requesting to resume the IPTV service, checking the service usage history and resuming the same IPTV service from a stopped point.

2. The method of claim 1, wherein the IPTV service is provided as a cloud service.

3. The method of claim 1, wherein a terminal used to re-access and request resuming the IPTV service differs from the terminal used to request starting the IPTV service.

4. The method of claim 3, wherein service qualities of the initially provided IPTV service and the resumed IPTV service differ from each other.

5. The method of claim 4, wherein the service qualities of the initially provided IPTV service and the resumed IPTV service differ from each other depending on specifications of a terminal provided initially and at resumption.

6. The method of claim 1, wherein the providing of the IPTV service comprises
issuing a request for a cloud computing service with respect to an application service and content that are required for the IPTV service,
in response to receiving the request for a cloud computing service, creating a cloud platform for the application service and content and providing the cloud computing service, and
acquiring location information of the IPTV terminal and location information of content of the IPTV service and creating a service session to provide the IPTV service for offering the content to the IPTV terminal.

7. An Internet protocol television (IPTV) service apparatus comprising:
a service request receiving unit configured to receive a request for an IPTV service from a user of an IPTV terminal;
a service identifying unit configured to check whether the requested IPTV service has stopped being provided; and
an IPTV service providing unit configured to continue to provide the IPTV service to the IPTV terminal from a stopped point if the provision of the IPTV service has been stopped before.

8. The IPTV service apparatus of claim 7, wherein the request for the IPTV service includes continuous service request information that requests continuing to provide the IPTV service that has been stopped before.

9. The IPTV service apparatus of claim 7, wherein the IPTV service providing unit checks whether the requested IPTV service has stopped being provided before by checking a service usage history that stores information about the IPTV service.

10. The IPTV service apparatus of claim 7, wherein the IPTV service providing unit checks the information about the IPTV terminal and provides a service with a quality suitable to the IPTV terminal based on the checked information.

11. The IPTV service apparatus of claim 7, wherein the IPTV service is provided as a cloud service.

12. The IPTV service apparatus of claim 7, wherein the IPTV terminal to be continuously provided with the IPTV service and the IPTV terminal initially provided with the IPTV service differ from each other in type.

13. The IPTV service apparatus of claim 12, wherein service qualities of the continuously provided IPTV service and the initially provided IPTV service differ from each other.

14. The IPTV service apparatus of claim 13, wherein the service qualities of the continuously provided IPTV service and the initially provided IPTV service differ from each other depending on specifications of a terminal that requests the IPTV service.

15. The IPTV service apparatus of claim 7, wherein the IPTV service providing unit comprises
an IPTV service control unit configured to request a cloud computing service with respect to an application service and content that are required for the IPTV service,
a cloud computing control unit configured to, in response to the request for a cloud computing service being received, create a cloud platform with respect to the application service and content and provide the cloud computing service through the cloud platform, and
a service session connection management control unit configured to acquire location information of the IPTV terminal and location information of content of the IPTV service and to create a service session to provide the IPTV service for offering the content to the IPTV terminal.

16. The IPTV service apparatus of claim 15, wherein the IPTV service providing unit further comprises a user mobility management control unit configured to track a location of the IPTV terminal to acquire the location information.

17. The IPTV service apparatus of claim 15, wherein the IPTV service providing unit further comprises a content processing information control unit configured to store information about an IPTV service provided by the IPTV service apparatus.

18. The IPTV service apparatus of claim 15, wherein the service session connection management control unit manages a service session that is configured by information including an identification (ID) of a 3rd party service server, an ID of content and an ID of the IPTV terminal.

19. An apparatus for providing an IPTV service, comprising:
an IPTV service control unit configured to request a cloud computing service with respect to an application service and content that are required for the IPTV service;
a cloud computing control unit configured to, in response to the request for a cloud computing service, create a cloud platform with respect to the application service and content and provide the cloud computing service through the cloud platform; and
a service session connection management control unit configured to acquire location information of the IPTV terminal and location information of content of the IPTV service, and to create a service session to provide the IPTV service for offering the content to the IPTV terminal.

20. The apparatus of claim 19, further comprising:
a user mobility management control unit configured to track a location of the IPTV terminal to acquire the location information.

21. The apparatus of claim 19, further comprising:
a content processing information control unit configured to store information about an IPTV service provided by the IPTV service apparatus.

22. The apparatus of claim 19, wherein the service session connection management control unit manages a service session that is configured by information including an identification (ID) of a 3rd party service server, an ID of content and an ID of the IPTV terminal.

23. A method of providing an IPTV service, comprising:
requesting a cloud computing service with respect to an application service and content that are required for the IPTV service;
in response to receiving the request for a cloud computing service, creating a cloud platform with respect to the application service and content and providing the cloud computing service through the cloud platform; and
acquiring location information of the IPTV terminal and location information of content of the IPTV service and creating a service session to provide the IPTV service for offering the content to the IPTV terminal.

24. The method of claim 23, further comprising:
tracking a location of the IPTV terminal to acquire the location information.
